# EUROPEAN PATENT SPECIFICATION

(11) **EP 0 456 881 B1**
(45) Date of publication and mention of the grant of the patent: **29.12.1993**
(21) Application number: 90117996.0
(22) Date of filing: 19.09.1990
(51) Int. Cl.: F16L 3/01, B66C 13/12

(54) **Raceway for supporting a duct-holder chain, and movable device for cleaning a textile apparatus**
Führungskanal für Leitungskette und bewegliche Vorrichtung zur Reinigung einer Textilmaschine
Canalisation de support pour chaîne porteuse de conduites et dispositif mobile de nettoyage d'un appareil textile

(30) Priority: 11.05.1990 IT 2026890
(43) Date of publication of application: 21.11.1991
(73) Proprietor: MAGITEX S.R.L., I-21020 Mornago (Varese) (IT)
(72) Inventor: Vagaggini, Marco, I-21100 Varese (IT)
(74) Representative: Forattini, Amelia

(56) References cited:
- EP-A- 0 021 153
- EP-A- 0 192 853
- DE-U- 8 811 440
- GB-A- 1 542 921

## Description

The present invention relates to a raceway for supporting a duct-holder chain.

More in particular, the raceway is suitable for supporting a duct-holder chain of the type which has a fixed end which is connected, in a connection point, to the central region of the raceway. By means of said fixed end the ducts can be inserted inside the chain. The chain furthermore has a movable end, opposite to the fixed end, for feeding a movable device. Chains of this type are well-known and are described for example in the European patent no. 0 021 153. The raceway comprises a bottom and two lateral walls for supporting the weight and limiting the movements of the chain. The raceway is divided into two approximately equal parts; one has a single chain and is arranged on one side with respect to the connecting point, and the other has a double chain and is arranged on the opposite side. In the single-chain part, the chain slides directly on the bottom of the raceway; in the double-chain part said chain slides on itself. In this manner the movable device can move along a path approximately twice as long as the chain.

The invention furthermore relates to a moving device for cleaning a textile apparatus which comprises a duct-holder chain and a raceway of the above described type. In particular, a movable device of this type is described in the German patent no. 35 03 755, in the Swiss patent no. 66 45 83, in the US patent no. 4 121 318, in the Italian patents no. 11 88 540 and no. 10 49 613. Reference is made to these prior documents for all the details which concern the movable device for cleaning a textile apparatus, for which the raceway according to the invention is particularly suitable.

The above is, in summary, the main field of industrial utilization of the invention, but said field does not constitute a limitation of the scope of said invention, since the raceway and the device according to the invention, in particular as described and claimed hereinafter, can be advantageously used in any other equivalent field in which processes and treatments requiring the movement and feeding of a device which is movable along a preset path are performed.

Raceways and movable devices of the above described type are known which can operate even on rather long paths, in particular for example with a chain approximately 50 meters long and therefore with a raceway approximately twice as long. However, in practice it has been observed that after a certain period of time, approximately one year of use, a severe disadvantage arises; in particular, the chain tends to slip out of the raceway and fall below, entailing the halting of the device.

An object of the present invention is to overcome the above described disadvantage, allowing the reliable operation of the device for a long period of time without disadvantages.

Another object of the invention is to provide the required improvement with a solution which requires practically no maintenance and extremely low installation expenses.

This aim, these objects and others are achieved by the raceway according to the invention, characterized in that at least said single-chain part comprises a projection which is arranged so as to at least partially cover the opening of said raceway so that the opening is sufficient to allow the passage, toward the inside of said raceway, of a connecting element for feeding said movable device and is insufficient to allow said chain to slip out.

Further advantages of the invention will become apparent from the description of a preferred but not exclusive embodiment of the raceway, illustrated only by way of non-limitative example in the accompanying drawings, wherein:
figure 1 is a side view of the movable structure and of the raceway according to the invention;
figure 2 is a side view of the movable structure and of the raceway according to the invention;
figure 3 is an enlarged detail view of the movable structure and of the raceway according to the invention;
figure 4 is a front sectional view of the raceway and of the connecting element of the movable structure;
figure 5 is a front sectional view of the raceway and of the chain.

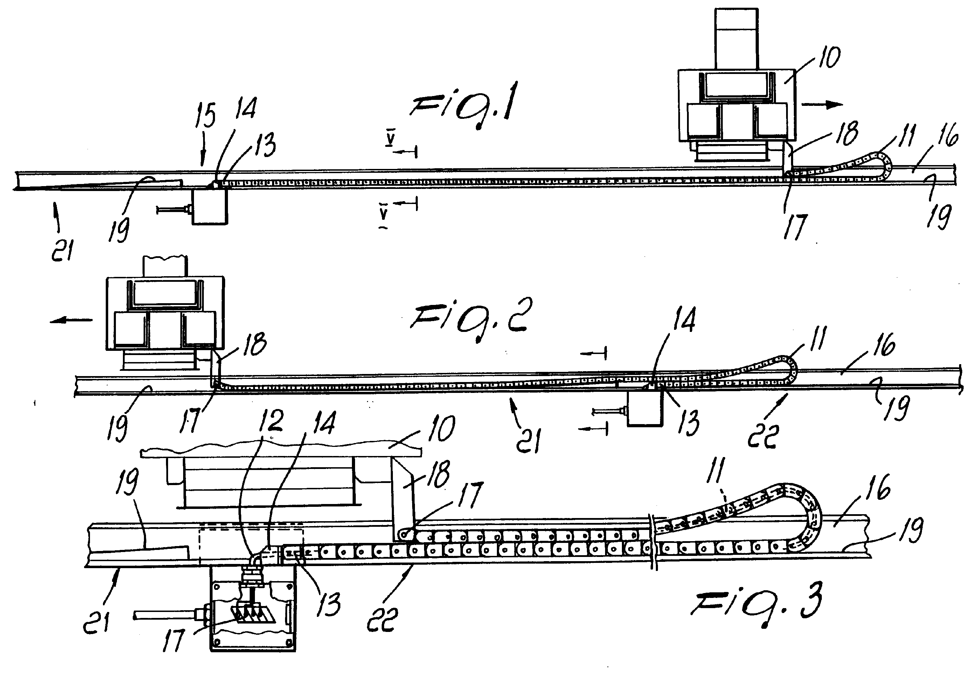

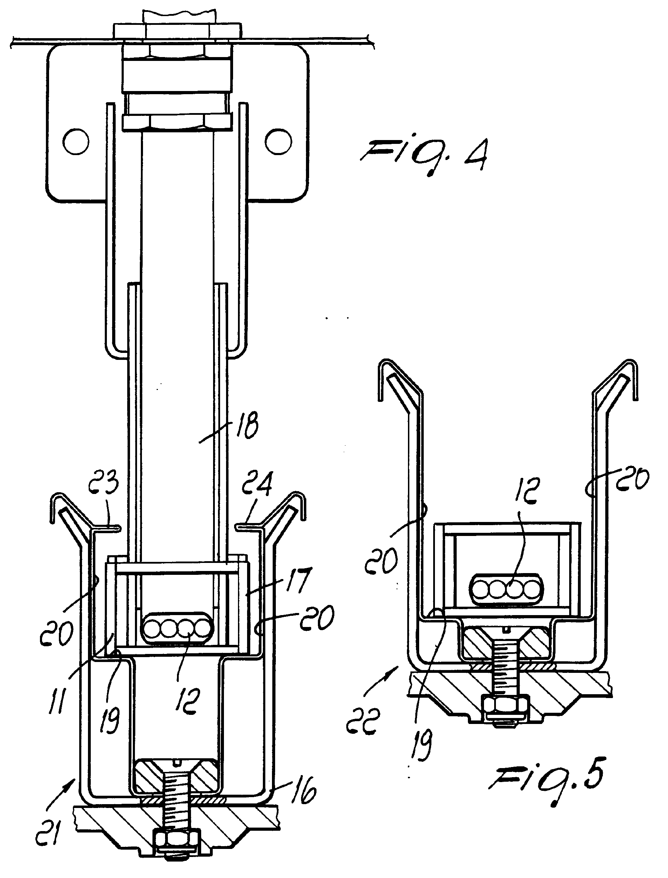

With reference to figures 1 to 5, the device 10 is movable back and forth, along a path which is preset for example with a rail, along a textile apparatus, so that the device 10 can clean said textile apparatus. The chain 11 is a commonly commercially available duct-holder chain which can bend only on one side, as is normal in such chains. The ducts 12 slide within the chain 11.

The fixed end 13 of the chain 11 is connected, in a connecting point 14, to the central region 15 of a raceway 16. In this manner the feed 17 of the conductors 12 is fixed.

The chain comprises a movable end 17 for feeding the movable device 10. In particular, the chain 11 is connected to the movable device 10 by means of a connecting element 18.

The raceway 16 comprises a bottom 19 and two lateral walls 20 for supporting the weight and limiting the movements of the chain 11.

The single-chain part 21 of the raceway 16 is arranged on one side with respect to the connecting point 14; in particular, with reference to figures 1, 2 and 3, on the left side. The double-chain part 22 of the raceway 16 is arranged on the opposite side with respect to the connecting point 14 and in particular, again with reference to figures 1, 2 and 3, on the right side.

The single-chain part 21 of the raceway 16 comprises a projection 23 which is arranged so as to at least partially cover the upper opening of the raceway 16 so that said upper opening is sufficient to allow the passage, toward the inside of the raceway, of the connecting element 18 for feeding the movable device, and is insufficient to allow the chain 11 to slip out of the raceway 16.

It is surprising that the projection 23 performs its function and allows the reliable operation of the device even if it is arranged only in the single-chain part of the raceway, whereas the double-chain part may not be provided therewith. According to this preferred embodiment, the bulk of the raceway is in fact extremely modest and it is particularly easy to perform inspections and checks inside the raceway.

According to a preferred embodiment of the invention, there are two projections 23 and 24 which are arranged so as to at least partially cover the upper opening of the raceway, providing a central opening, through which the connecting element 18 for feeding the movable device 10 can enter. In this manner the apparatus as a whole is particularly compact.

The bottom 19 of the single-chain part 21 of the raceway 16 is preferably raised with respect to the bottom 19 of the double-chain part 22 of the raceway, at least proximate to the connecting point 14. The extent of this rise is approximately equal to the thickness of the chain. In this manner it is possible to further improve reliability in operation, particularly when using very long duct-holder chains 11.

The operation of the device is illustrated by figures 1 and 2, which illustrate in particular the device 10 when it is respectively at the double-chain part 22 and at the single-chain part 21.

The connecting element 18 can be shaped so as to enter the raceway laterally rather than from above as described. The projection 23 can furthermore also be arranged in the double-chain part 22 of the raceway 16; in this case said projection must be raised in the double-chain part 22 of the raceway so as to allow the distance between the projection 23 and the bottom of the raceway to be greater than twice the radius of curvature of the chain.

## Claims

1. Raceway for supporting a duct-holder chain (11), said chain having:
a fixed end (13) which is connected, at a connecting point (14), to the central region (15) of said raceway, for feeding said ducts, and a movable end (17) for feeding a movable device (10), said raceway comprising:
a bottom (19) and two lateral walls (20) for supporting the weight and limiting the movements of said chain, a single-chain part (21) arranged on one side with respect to said connecting point (14), and a double-chain part (22) arranged on the opposite side with respect to said connecting point (14), characterized in that at least said single part (21) comprises a projection (23) which is arranged so as to cover at least partially the opening of said raceway, so that said opening is sufficient to allow the passage, toward the inside of said raceway, of a connecting element (18) for feeding said movable device and is insufficient to allow said chain (11) to slip out.

2. Raceway according to claim 1, characterized in that it comprises two projections (23, 24) which are arranged so as to cover at least partially the upper opening of said raceway, providing an upper central opening.

3. Raceway according to claims 1 or 2, characterized in that the bottom (19) of said single-chain part (21) is raised with respect to the bottom (19) of said double-chain part (22), at least proximate to said connecting point (14).

4. Movable device for cleaning a textile apparatus, comprising a duct-holder chain and a raceway according to any one of claims 1 to 3.

## Patentansprüche

1. Führungskanal zur Aufnahme einer Leitungskette (11), wobei die Kette ein ortsfestes Ende (13), das zur Speisung der Leitungen an einem Anschlußpunkt (14) mit dem Mittelbereich (15) des Führungskanals verbunden ist, und ein bewegliches Ende (17) zur Speisung einer beweglichen Vorrichtung (10) aufweist, und wobei der Führungskanal einen Boden (19) und zwei Seitenwände (20) zur Aufnahme des Gewichts und zur Begrenzung der Bewegungen der Kette, einen Einzelkettenteil (21) auf der einen Seite des Anschlußpunkts (14) und einen Doppelkettenteil (22) auf der entgegengesetzten Seite des Anschlußpunkts (14) aufweist, dadurch gekennzeichnet, daß zumindest der Einzelkettenteil (21) einen Vorsprung (23) aufweist, der so angeordnet ist, daß er zumindest teilweise die Öffnung des Führungskanals derart abdeckt, daß die Öffnung ausreicht, den Durchtritt eines Anschlußelements (18) zur Speisung der beweglichen Vorrichtung in Richtung der Innenseite des Führungskanals zu ermöglichen, jedoch nicht ausreicht, das Herausgleiten der Kette (11) zu gestatten.

2. Führungskanal nach Anspruch 1, dadurch gekennzeichnet, daß er zwei Vorsprünge (23,24) aufweist, die so angeordnet sind, daß sie zumindest teilweise die obere Öffnung des Führungskanals abdecken und eine obere Mittelöffnung vorsehen.

3. Führungskanal nach den Ansprüchen 1 oder 2, dadurch gekennzeichnet, daß der Boden (19) des Einzelkettenteils (21) zumindest in der Nähe des Anschlußpunkts (14) gegenüber dem Boden des Doppelkettenteils (22) angehoben ist.

4. Bewegliche Vorrichtung zur Reinigung einer Textilmaschine mit einer Leitungskette und einem Führungskanal nach einem der Ansprüche 1 bis 3.

## Revendications

1. Voie de guidage destinée à supporter une chaîne de retenue de conduite (11), cette chaîne comportant :
une extrémité fixe (13) qui est raccordée en un point de liaison (14) à la zone centrale (15) de la voie de guidage, destinée à l'amenée de conduites, et une extrémité mobile (17) destinée à l'amenée d'un dispositif mobile (10), cette voie de guidage comprenant :
un fond (19) et deux parois latérales (20) destinés à suppporter le poids et à limiter les mouvements de la chaîne, un élément d'une seule chaîne (21) disposé sur un côté par rapport au point de liaison (14) et un élément à double chaîne (22) disposé sur le côté opposé par rapport au point de liaison (14), caractérisée en ce qu'au moins la partie unique (21) comprend une saillie (23) qui est disposée de façon à recouvrir au moins partiellement l'ouverture de cette voie de guidage de sorte que cette ouverture suffit à laisser le passage, en direction de l'intérieur de la voie de guidage, à un élément de liaison (18) pour amener le dispositif mobile et s'avère insuffisant pour autoriser la sortie de la chaîne (11).

2. Voie de guidage selon la revendication 1, caractérisée en ce qu'elle comprend deux saillies (23, 24) qui sont disposées de façon à recouvrir au moins partiellement l'ouverture supérieure de cette voie de guidage, assurant une ouverture centrale supérieure.

3. Voie de guidage selon la revendication 1 ou 2, caractérisée en ce que le fond (19) de l'élément.à chaîne unique (21) est relevé par rapport au fond (19) de l'élément à double chaîne (22) au moins à proximité du point de liaison (14).

4. Dispositif mobile destiné au nettoyage d'un appareil textile, comprenant une chaîne de retenue de conduite et une voie de guidage selon l'une quelconque des revendications 1 à 3.
